# EUROPEAN PATENT SPECIFICATION

(11) **EP 1 436 963 B1**
(45) Date of publication and mention of the grant of the patent: **05.07.2006**
(21) Application number: 02765108.2
(22) Date of filing: 08.10.2002
(51) Int. Cl.: H04L 29/06, H04L 12/64, H04M 7/00

(54) **Method, apparatus and computer program for selecting a media gateway control function based on the monitoring of resources of media gateway functions**
Verfahren, Einrichtung und Computerprogramm zur Auswahl einer Medienübergangskontrollfunktions basierend auf der Überwachung von Resourcen von Medienübergangsfunktionen
Procédé, dispositif et logiciel d'ordinateur permettant la selection d'une fonction de commande de passerelle de média à base de la surveillance de ressources de fonctions de la passerelle de média

(30) Priority: 09.10.2001 GB 0124216
(43) Date of publication of application: 14.07.2004
(73) Proprietor: Orange S.A., 75015 Paris Cédex 15 (FR)
(72) Inventor: ALLAN, R; c/o Orange Personal Com. Serv. Ltd., Bradley Stoke, Bristol BS32 4QJ (GB)
(74) Representative: Cross, James Peter Archibald
(86) International application number: PCT/GB2002/004561
(87) International publication number: WO 2003/032601

(56) References cited:
- EP-A- 1 014 633
- EP-A- 1 089 515
- WO-A-00/48368
- ROSENBERG J ET AL: "A Framework for Telephony Routing over IP" IETF RFC 2871, [Online] June 2000 (2000-06), pages 1-25, XP002232727 Retrieved from the Internet: <URL:ftp://ftp.rfc-editor.org/in-notes/rfc 2871.txt> [retrieved on 2003-02-26] cited in the application
- ITU-T: "Recommendation H.225.0: Call signalling protocols and media stream packetization for packet-based multimedia communication system" SERIES H: AUDIOVISUAL AND MULTIMEDIA SYSTEM, [Online] 7 March 2001 (2001-03-07), pages 1-205, XP002232728 Retrieved from the Internet: <URL:http://standard.pictel.com/ftp/avc-si te/till_0012/0011_Gen/H2250v4-final_010317 .zip> [retrieved on 2003-02-26]

## Description

### Field of the Present Invention

The present invention relates to methods of, apparatus for and computer programs for selecting gateway functions through which to route a communication session from one communications network to another communications network. More particularly, but not exclusively, the present invention relates to methods of, apparatus for and computer programs for selecting a gateway control function controlling a gateway function through which to route a communications session from a packet-switched network to a circuit-switched network on the basis of monitoring the current state of resources at a plurality of gateway functions connecting the packet-switched network to the circuit-switched network.

### Background of the Present Invention

In the field of telecommunications, end user applications are typically provided over a variety of different types of network. For example, telephony is an application widely used over conventional Public Switched Telephone Networks (PSTNs) as well as second generation mobile or cellular networks, such as the Groupe Spéciale Mobile (GSM) standard. Other common end user applications include facsimile, video and multimedia calls and conferencing, and data communications such as point-to-point data communications. PSTN and GSM networks are both examples of circuit-switched networks in which network resources, such as communications links and switches, are generally reserved for the duration of a communication session. However, there is great interest in providing end user applications over packet-switched networks such as those using the Internet Protocol (IP). For example, Voice over IP (VoIP), as telephony in IP networks is sometimes known, is of interest in both fixed networks, such as the Internet or private IP networks, and in third generation mobile or cellular networks, such as those conforming to the Third Generation Partnership Programme (3GPP). Packet-switched networks offer advantages over circuit-switched networks in that network resources are normally not reserved for the duration of the communication session. Rather, data packets may be routed through various different network nodes in accordance with routing algorithms.

Whilst there is great interest in evolving towards newer packet-switched networks, it is widely recognised that older types of network will remain in use for a considerable period of time. For example, although mobile or cellular operators are developing 3GPP IP networks, it is expected that telephony and other types of calls from 3GPP terminals to "legacy" terminals in the PSTN will constitute one of the major traffic cases for a considerable period of time. It is essential for network operators to provide connectivity between the various different types of network, thereby enabling communication sessions to be established between different networks. Gateways will be deployed to provide connectivity between the various different network types.

In 3GPP, Internet Engineering Task Force (IETF), and the International Telecommunication Union telecommunication (ITU-T) standards terminology, the entity which provides media mapping and/or transcoding functions between potentially dissimilar networks is known as a media gateway function (MG). For example, a MG may be used to convert between data packet streams in a packet-switched network and analogue or digital signals over bearer channels of a circuit-switched network. A network operator will typically deploy many hundreds or thousands of MGs to connect to various different external networks. Each MG will normally be able to handle several thousand connection channels simultaneously. According to the 3GPP, IETF and ITU-T standards, the functions of media conversion and connection control are separated in what is known as a physically decomposed gateway. A Media Gateway Controller function (MGC) is used to allocate and manage the connection resources of one or more MGs which perform the task of media conversion. For example, a MGC may control the reservation, use and release of media conversion resources and bearer channels, or trunks, for connecting to a circuit-switched network of a MG. Typically, a MGC will also have a signalling gateway function (SG) to convert between the various signalling and control data formats of different types of network. MGCs may also query the state of resources of MGs which they control to determine whether a bearer channel to a circuit-switch network is operational, for example. Importantly, any single resource, such as a trunk, will be controlled only by one MGC at any one point in time.

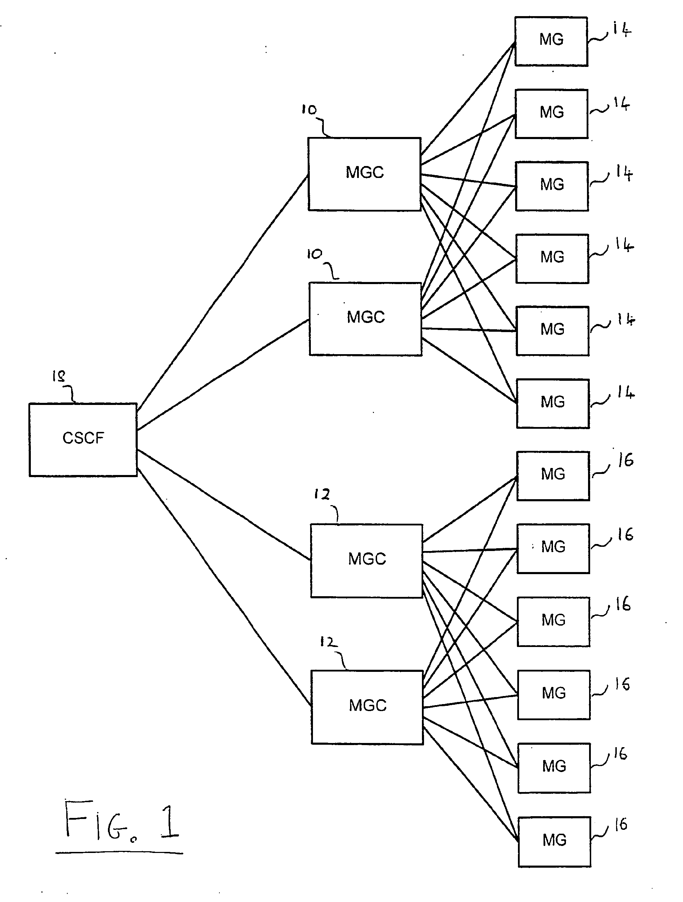

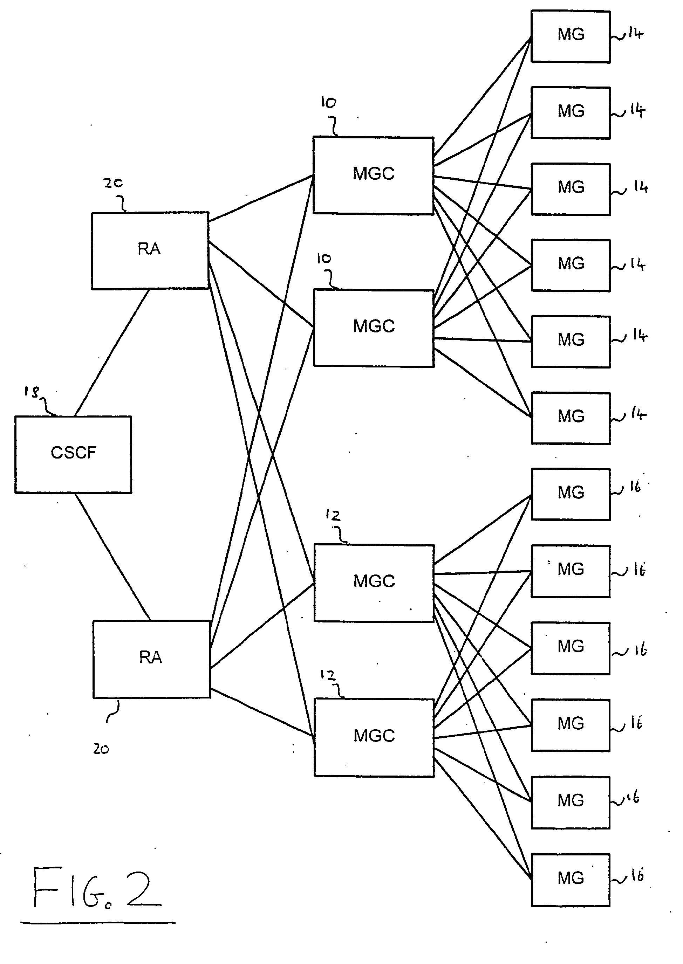

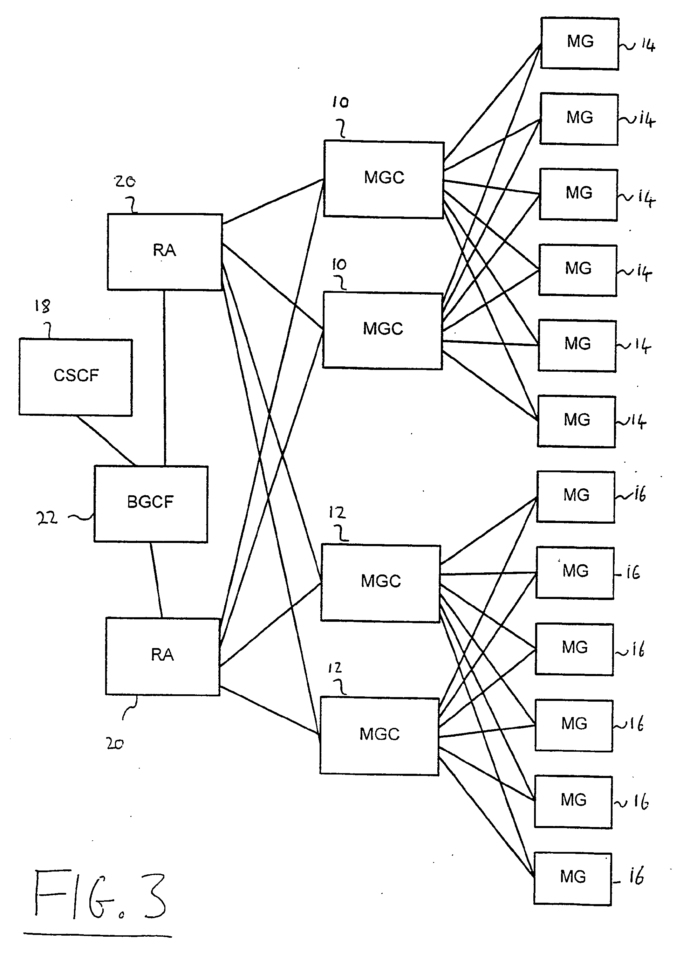

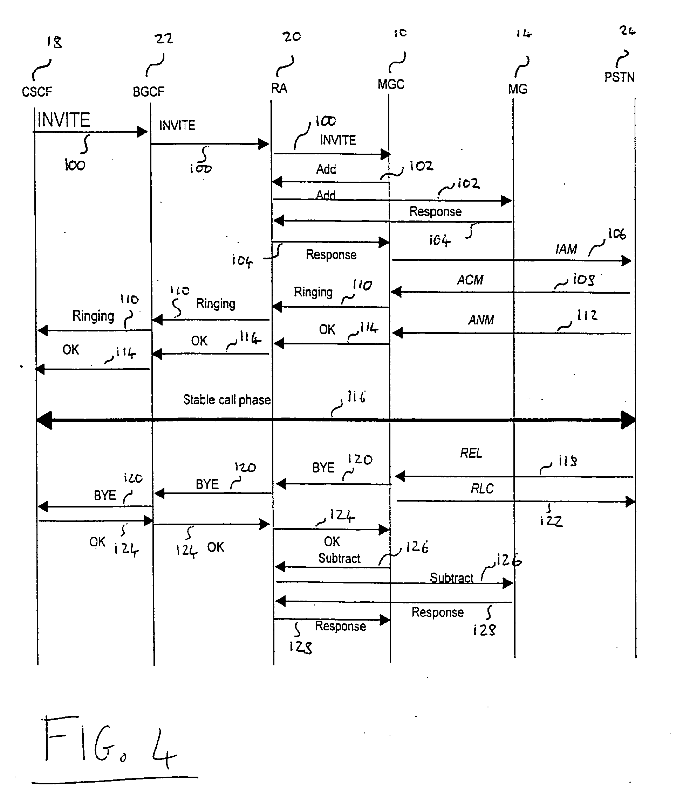

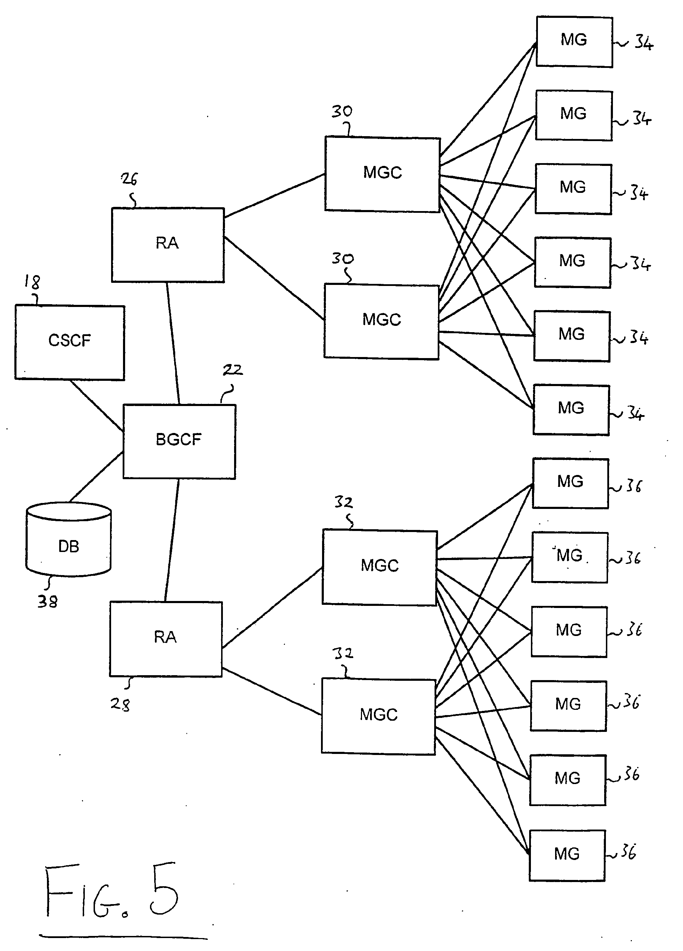

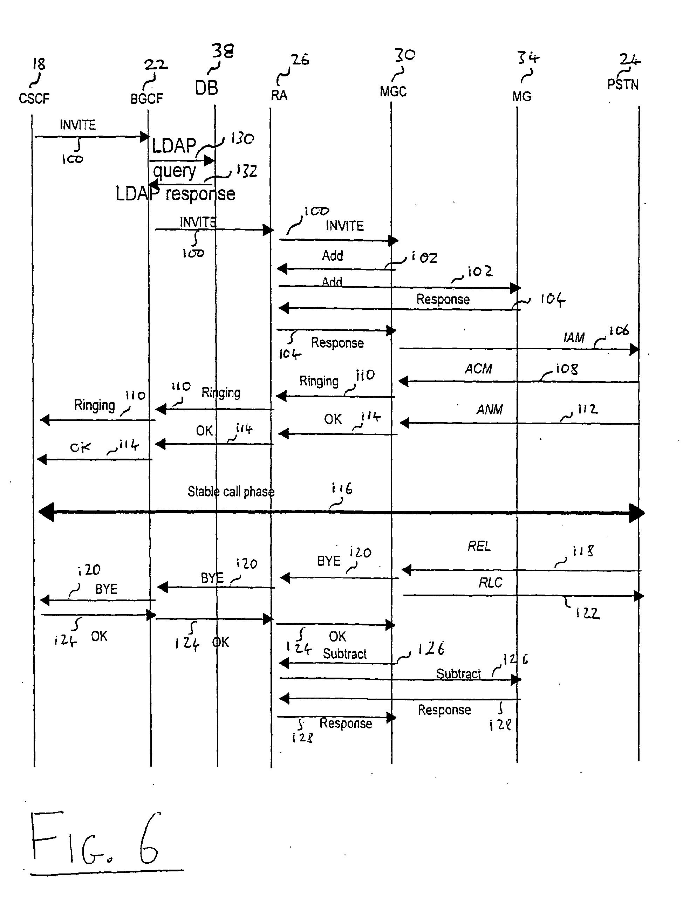

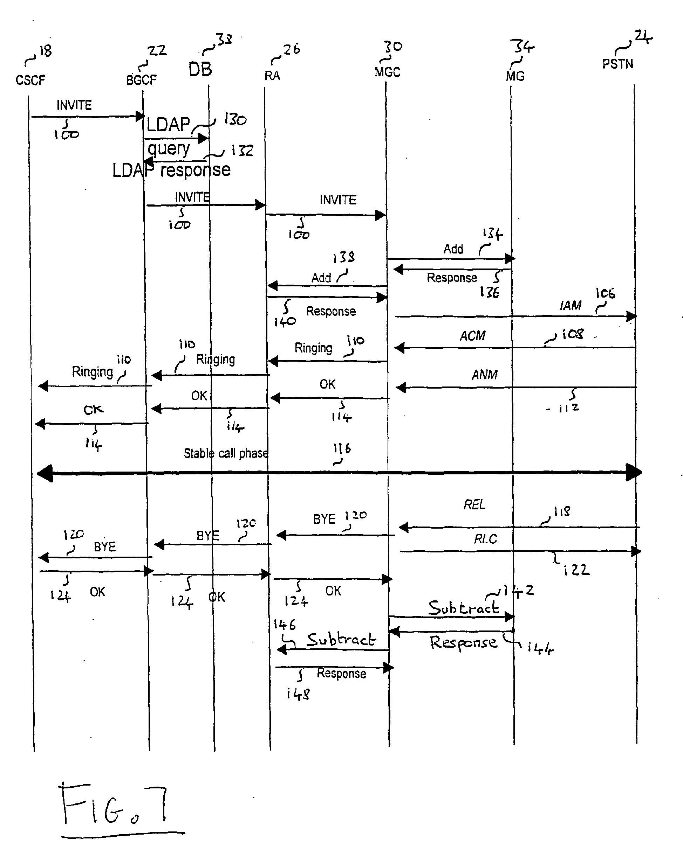

In a typical 3GPP network architecture, a 3G domain, as shown in Figure 1, will have a number of MGCs 10, 12 connected to a number of MGs 14, 16 for routing communications out to other network domains, such as a PSTN, GSM network, another 3GPP network, or other IP based network. Although for load balancing and resilience, each MG will typically be connected to two or more MGCs, each MGC will typically have, under its control, only a limited set of all the MGs connecting to any particular external network. Thus, although all of MGs 14, 16 connect to the same external network, for example the PSTN, only MGCs 10 may control MGs 14 and only MGCs 12 may control MGs 16. In 3GPP terminology, the entity responsible for maintaining a call is known as Call State Control Function (CSCF). When a CSCF 18 needs to route a communication session or call out of the 3G domain to a particular external network, a MGC must be instructed to initiate reservation of the appropriate resources at a MG connecting to that external network. The CSCF sends a message to one of MGCs 10, 12 which control MGs 14, 16 connecting to the external network. However, according to current standards, the MGC is selected by the CSCF without any knowledge of the current state of the resources at the various MGs controlled by the MGC. Effectively, the CSCF makes a blind decision as to which of the MGCs which control MGs connecting to the external network to use. This is inefficient in terms of use of resources and quality of service. In particular, it may result in outgoing calls being unnecessarily rejected due to the selected MGC having insufficient resources available at its disposal, whereas another MGC may have been able to route the call. Also it may result in incoming calls arriving at particular MGs being unnecessarily rejected due to over-reservation of those MGs' resources by the controlling MGCs. For example, CSCF 18 may blindly select one of MGCs 10 having specific trunk resources at MGs 14 at its disposal, whereas, in fact MGs 16 may have more available resources. Note that the blindly selectected MGC 10 may not (and indeed is likely to not) have control of all of the resources at MGs 14 at any one point in time.

In short, the current proposed standards do not load balance the resources of MGs effectively. A more efficient solution to the problem of allocating resources when routing calls from a packet-switch network is needed. One object of the present invention is to provide such a solution.

In the prior art, protocols and systems are known for improving routing decisions when a call is routed from a packet-switched network to a circuit-switched network. The Telephony Routing over IP (TRIP) protocol is described in IETF Request for Comments (RFC) 2871 and Internet Draft *draft-ietf-iptel-trip-09.txt (work in progress)* available at the IETF website *www.ietf.com*. TRIP describes itself as an inter-domain location and routing protocol. According to TRIP, reachability and routing information about gateways toward telephony destinations in the PSTN are exchanged between entities known as location servers. Location servers, in different IP domains, establish peering relationships with one another to disseminate this routing and reachability information between themselves. Using this information, an IP domain may choose an appropriate gateway, possibly in another IP domain, through which to "breakout" into the PSTN. The information exchanged by location servers in TRIP is a set of "routing objects". Routing objects consists of a range of telephone numbers which are reachable, and an IP address or host name which is the "next hop" towards a gateway which can reach that range. According to RFC 2871, routing objects may include additional information which characterises gateways such as protocols, feature supported and capacity. However, a capacity metric for inclusion in routing objects exchanged between location servers is limited in TRIP to representing "the static capacity of [a] gateway, not the dynamic available capacity which varies continuously during the gateway's operation." To enable inter-domain dissemination of gateway information by location servers, an intra-domain solution is proposed by which a location server may learn of the characteristics of gateways within its IP domain. It is suggested that the Service Location Protocol (SLP) be used for this purpose. As an alternative, it is suggested that the registration procedures of the Session Initiation Protocol (SIP) or H. 323 "be extended to allow a gateway to effectively register as well". As a further alternative, the Lightweight Directory Access Protocol (LDAP) is suggested for use by the location server.

Ericsson have put forward a proposal for a Breakout Gateway Control Function (BGCF). This entity is detailed in TDoc S2-010384 available at the 3GPP website www.3gpp. org. According to this document, when a CSCF in a 3G domain needs to route a call out to a circuit-switched network, it passes a call setup request message to the BGCF which determines whether the "breakout" should occur in the 3G network or in another 3G domain. According to its determination, the BGCF either forwards the call setup request message to a MGC in the same 3G domain or forwards the message to another 3G domain. No details of how the BGCF makes its determination are provided in TDoc S2-010384.

Patent application WO 00/48368 relates to an arrangement for distributing and dispatching traffic in a network, especially H.323 generated traffic. The arrangement comprises one or more gatekeepers, here designated as so-called external or real gatekeepers, and for the purpose of utilising such real gatekeepers in an efficient and cost saving manner, and also for avoiding reconfiguration of endpoints depending on which gatekeepers with which they want to communicate. One or more internal or lightweight gatekeepers are introduced whereby each such internal gatekeeper basically understands any message used by any endpoint when registering to a real gatekeeper.

### Summary of the Present Invention

According to the present invention there is provided a method of selecting a gateway control function for routing a communications session from a packet-switched network as specified in claim 1. Further, there is provided an apparatus adapted to perform the method as specified in claim 12 and a computer program adapted to perform the method as specified in claim 13.

Advantageously, the present invention provides an efficient way of allocating resources when routing a communications session out from the first to the second communications network. Load balancing and resiliency of gateway resources is improved. In particular, the present invention results in fewer outgoing and incoming communications sessions being rejected due to insufficient available resources. This results in reduced capacity requirements for gateways and thereby reduced processing requirements, numbers of physical gateways and costs.

Furthermore, implementations of the present invention have low processing requirements and do not require substantial or any modification to gateway functions, gateway control functions, or protocols used to control gateway functions or initiate a communications session. This results in a scaleable solution which is easy to integrate into networks.

Other advantages of the present invention will be apparent from the description.

Other aspects of the present invention are set out in the dependent claims.

There now follows, by way of example only, a detailed description of embodiments of the present invention in which:

### Brief Description of Diagrams

Figure 1 shows a prior art arrangement for connecting a 3G network with an external network, comprising media gateway functions and media gateway controller functions;

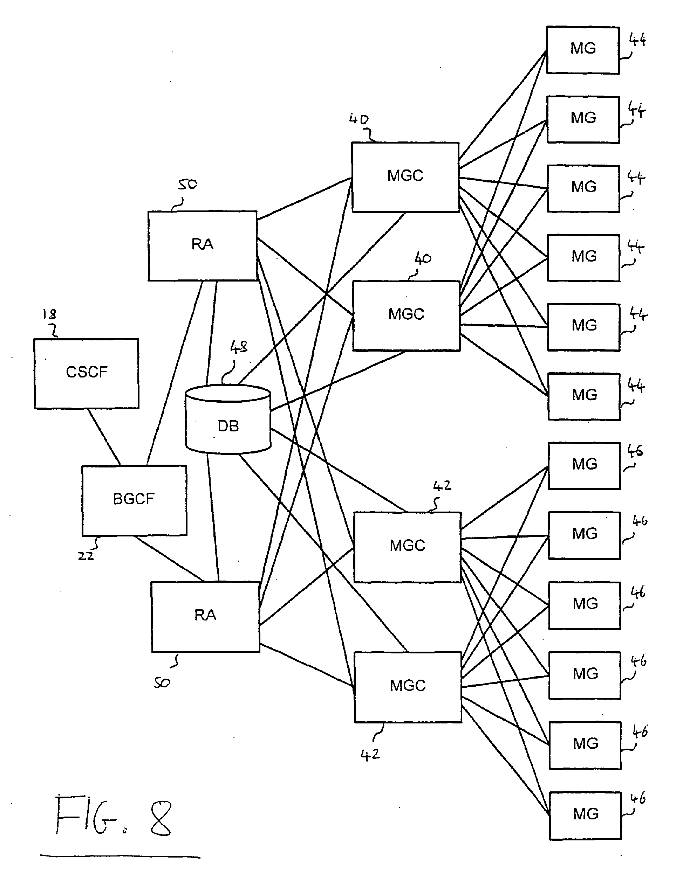

Figure 2 shows an arrangement for connecting a 3G network with an external network according to the present invention, comprising resource allocator functions;
Figure 3 shows an arrangement for connecting a 3G network with an external network according to the present invention, comprising resource allocator functions and a breakout gateway control function;

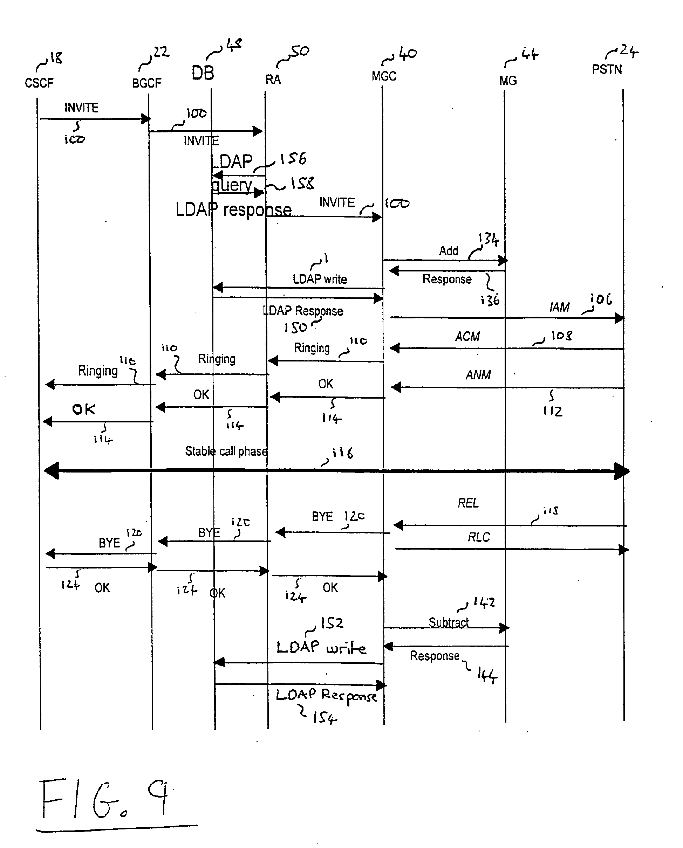

Figure 4 shows the message flows for establishing and terminating a telephone call originating in a 3G domain arranged in accordance with Figure 3, in which messages concerning the current state of media gateway function resources sent between media gateway controller functions and media gateway functions are passed through resource allocator functions;
Figure 5 shows an arrangement for connecting a 3G network with an external network according to the present invention, comprising resource allocator functions and a breakout gateway control function with a database for selecting a resource allocator function;
Figure 6 shows the message flows for establishing and terminating a telephone call originating in a 3G domain arranged in accordance with Figure 5, in which messages concerning the current state of media gateway function resources sent between media gateway controller functions and media gateway functions are passed through resource allocator functions;
Figure 7 shows the message flows for establishing and terminating a telephone call originating in a 3G domain arranged in accordance with Figure 5, in which messages concerning the current state of media gateway function resources sent between media gateway controller functions and media gateway functions are copied to resource allocator functions;
Figure 8 shows an arrangement for connecting a 3G network with an external network not being part of the present invention, comprising resource allocator functions, a breakout gateway control function, and a database shared between the resource allocator functions and media gateway control functions; and
Figure 9 shows the message flows for establishing and terminating a telephone call originating in a 3G domain arranged in accordance with Figure 8 and not being part of the present invention, in which media gateway controller functions and resource allocator functions share a common database function for storing data concerning the current state of media gateway function resources.

### Detailed Description of Preferred Embodiments of the Present Invention

Figure 2 shows a 3G domain according to the present invention. The 3G domain is an all-IP domain and is capable of establishing a variety of communication sessions on behalf of end users, such as telephony, video, facsimile, data, and multimedia calls. The 3G domain includes a number of MGCs 10, 12 controlling a number of MGs 14, 16 which provide media conversion and/or transcoding for communication sessions established between the 3G domain and a particular external network domain. The following description will assume that the external network domain is a PSTN, using the Integrated Services Digital Network (ISDN) protocol and Signalling System Seven (SS7) for trunking, and that the communication session is a telephone call, although it will be appreciated that the invention has application in routing communications sessions other that telephone calls to external network domains other than the PSTN.

Both telephone calls originating in the 3G domain and in the PSTN may be routed through one of MGs 14, 16. Each MG has a set of resources including media conversion capabilities and bearer channel connections to the PSTN, also known as trunks or circuits. Different resources at different MGs may have different capabilities. For example, different bearer channels to the PSTN may have different characteristics such as different bandwidth, quality of service, unit cost or other metrics. Also, different MGs may have different capabilities, such as the capacity to handle different numbers of simultaneous connections and the ability to perform different media conversions. Each MGC 10, 12 controls its set of MGs 14, 16 using the Megaco protocol (see IETF RFC 3015 / ITU-T Recommendation H.248). Using Megaco, MGCs 10, 12 may control the reservation, management and release of bearer channels and media conversion resources available at its MGs 14, 16. In Megaco terminology, when routing a communications session through a MG, a "context" is established and constitutes an association between a collection of "terminations" at the MG. For example, a context may associate the termination of Real Time Protocol (RTP) stream from the 3G domain with a termination of a bearer channel of the PSTN. The Megaco protocol includes commands sent by an MGC to one of its MGs for "adding", "subtracting", "modifying", and "moving" terminations in respect of contexts. Thus, to reserve media conversion resources and a PSTN bearer channel for a telephone call to be routed out the PSTN, a MGC may send an Add command to one of its MGs. To release those resources, the MGC may send a Subtract command to the MG. A context is implicitly created or deleted on the addition or subtraction of the first or last termination. The Megaco protocol also provides for a MGC to query the capabilities or current state of a MG. The AuditValue command returns the current state of properties, events, signals and statistics of terminations at a MG to the requesting MGC. The ServiceChange command allows the MG to notify a MGC that one or more terminations are about to be taken out of service or have just returned to service.

According to 3GPP standards, 3G domains use the Session Initiation Protocol (SIP) to establish communications sessions between calling and called parties (see IETF RFC 2543). SIP provides several request methods for establishing, negotiating and terminating communications sessions. These request methods include INVITE (for inviting a called party into a session), BYE (for terminating a call or call request), and ACK (for acknowledging a successful response). SIP also includes a number of response messages including 180 Ringing (to indicate that a called party terminal is ringing), 200 OK (to indicate success of a request) and various others. SIP may use the Session Description Protocol (SDP) to describe the characteristics of a session, such as media and quality of service, which may be negotiated between a calling party and called parties. SIP uses proxy or redirect servers to route or re-route the messages from the calling party terminal or device to an appropriate called party terminal or device which may vary depending on various parameters.

Conventionally, to establish a telephone call from the 3G domain to the PSTN, CSCF 18 (effectively a SIP proxy server) passes a SIP INVITE request message to one of MGCs 10, 12 without knowing anything about the state of the resources of the MGs 14, 16 under their control. However, according to embodiments of the present invention, the SIP INVITE request is first sent to a Resource Allocator function (RA) 20 which is able to make an intelligent decision as to which one of MGCs 10, 12 to route the SIP INVITE request message to. For load balancing and resilience, two or more RAs 20 are used, each capable of forwarding the SIP INVITE request message to any of the MGCs 10, 12 controlling the MGs 14, 16 connecting to the PSTN. According to variants of embodiments of the present invention, the SIP INVITE request message is first sent to a Breakout Gateway Control Function (BGCF) 22, as proposed by 3GPP TDoc S2-010384 and as shown in Figure 3. BGCF 22 determines whether breakout is to occur in the 3G domain or in another IP domain. Assuming the breakout is to occur in the same domain, the SIP INVITE request message is then forwarded to one of RAs 20 as before. According to embodiments of the present invention, the RAs are able to make an intelligent decision because they are aware of the current state of the resources of MGs 14, 16 by having received Megaco messages passing between the MGCs 10, 12 and MGs 14, 16, as will be described below.

According to one embodiment of the present invention, all Megaco messages passing between MGCs 10, 12 and MGs 14, 16 are passed through one of RAs 22 which share a database function (not shown) for storing information on the current state of MG resources learnt from the Megaco messages.

The message flows for establishing and terminating a telephone call originating in the 3G domain are shown in Figure 4 in which SIP messages are indicated by capital letters, Megaco messages are indicated by mixed case letters and ISDN User Part (ISUP) messages, which are used in the PSTN for controlling the establishment and release of circuits, are indicated by italic letters. When establishing a telephone call from the 3G domain to the PSTN, a SIP INVITE request message 100 is passed to BCGF 22. Assuming BGCF 22 determines that the PSTN breakout is to occur in the same 3G domain, the SIP INVITE request message 100 is passed to one of RAs 20 which selects one of MGCs 10 to which the SIP INVITE request message 100 is forwarded. The MGC generates a Megaco Add message 102 for sending to one of MGs 14. However, MGC 10 passes the Megaco Add message 102 through the RA 20 which forwards the message onto to the MG. The MG 14 confirms reservation of resources and establishment of a context by generating a Megaco Response message 104 which is also passed via the RA to the MGC 10. Thus, by receiving the Megaco Add message and its response, the RA 20 is informed of the resources being reserved at the MG 14. This information is stored in the database shared by RAs 20 for use when selecting a MGC for routing a telephone call out to the PSTN.

On receipt of the Megaco Response message 104, the MGC 10 maps the SIP INVITE request message to an appropriate ISUP Initial Address Message (IAM) 106 for sending to a switch 24 in the PSTN. ISUP to SIP mapping may achieved in accordance with the IETF internet draft *draft-ietf-sip-isup-02.txt (work in progress)* available at the IETF website *www.ietf.com.* When the ringing call to the called telephone in the PSTN is completed, the PSTN switch 24 returns an ISUP Address Complete Message (ACM) 108 to the MGC 10 which is mapped to a SIP Ringing Message 110 which is passed through the RA 20 to the BGCF 22 and to the CSCF 18. When the called telephone in the PSTN is answered, an ISUP Answer Message (ANM) 112 is sent by PSTN switch 24 to MGC 10 and is mapped to SIP OK Message 114 which is passed to RA 20, then to BGCF 22, and then to CSCF 18. At this stage, a stable call connection phase 116 is established between the CSCF 18 and PSTN switch 24 and between the telephones of the 3G domain and the PSTN.

When the call is ended, for example by the called party, the PSTN switch 24 passes a ISUP Release message (REL) 118 to the MGC 10 which is mapped to a SIP BYE message 120 and is forwarded to RA 20, then to BGCF 22, and then to CSCF 18. The MGC 10 also passes an ISUP Release Complete Message (RLC) 122 to the PSTN 24 to acknowledge release of the PSTN trunk. In response to the SIP BYE 120, CSCF 18 sends a SIP OK message 124 to BGCF 22 which forwards it to RA 20 and onto MGC 10. MGC 10 then generates a Megaco subtract message 126 for sending to the MG 14 handling the call. However, the Megaco subtract message is passed to RA 20 and onto MG 14. In response, MG14 generates a Megaco Response message 128 for sending to MGC 10. Again, the Megaco Response message 128 is passed via RA 20 to MGC 10. Thus, RA 20 is informed of the release of resources by the MG 14. This information is stored in the database shared by RAs 20 for future use in selecting a MGC when routing a call out to the PSTN.

It will be appreciated that similar Megaco Add, Subtract and Response messages will also be passed between MGCs 10, 12 and their respective MGs 14, 16, when the call is ended by the calling party in the 3G domain. Similarly, when a call originating in the PSTN is routed through one of MGs 14, 16, Megaco messages will also be passed between the appropriate MGCs 10, 12 and MGs 14, 16, to reserve resources at the MG and to release resources when the call is ended by either the called or calling party. Furthermore, Megaco messages used in circumstances other than call establishment or termination, such as Megaco AuditValue and ServiceChange messages, may also be passed through RAs 20. By passing all these Megaco messages through RAs 20, RAs 20 may be informed of the current state of resources at each of the MGs 14, 16 under control of MGCs 10, 12. Thus, RAs 20 are able to choose which one of MGCs 10, 12 to pass SIP INVITE request messages to when routing a call out to the PSTN on the basis of knowledge of the current state of resources at each of the MGs 14, 16.

In a 3G domain having large numbers of RAs, MGCs and MGs connecting to various external networks, it is unrealistic to have each RA able to route SIP INVITE messages to any of the MGCs. Rather, RAs will have access to and a security relationship with selected MGCs. When receiving a SIP INVITE message to route a call out to the PSTN, if the receiving RA 20 does not have access to or a security relationship with a MGC capable of routing the call, it may route the SIP INVITE message to another RA which does. Alternatively, according to another embodiment of the present invention, a database function may be used as shown in Figure 5. In Figure 5, RA 26 has access to MGCs 30 but not MGCs 32. Similarly, RA 28 has access to MGCs 32 but not MGCs 30. MGCs 30 control MGs 34 and MGs 32 control MGs 36 respectively. When routing a call out to the PSTN, CSCF 18 passes a SIP INVITE request message to BGCF 22 as described above. Assuming BGCF 22 determines that the PSTN breakout is to occur in the same 3G domain, the SIP INVITE request message is passed to one of RAs 26, 28. However, BGCF 22 determines which RA to route the message to by querying a database function (DB) 38 using the LDAP protocol. DB maintains data mapping a set of parameters of the telephone call to be routed to the PSTN, such as the telephony destination number, to the set of RAs capable of accessing MGCs controlling MGs capable of routing the call. Thus, BGCF 22 learns of the appropriate RA to route the SIP INVITE message to, for example, RA 26. RA 26 then selects one of MGCs 30 on the basis of its knowledge of the current state of resources at MGs 34 as described above. The message flows for establishing and terminating a telephone call originating in the 3G domain are shown in Figure 6 which is substantially identical to Figure 4 as described above, save that BGCF 22 passes a LDAP Query message 130 to DB 38 and receives a LDAP Response message 132 to determine which RA to route the SIP INVITE request message 100 to.

According to another embodiment of the present invention, all Megaco messages passed between MGCs and MGs are reflected - i.e. copied - to the RAs thereby informing the RAs of the current state of resources at the MGs. The message flows for establishing and terminating a telephone call originating in the 3G domain are shown in Figure 7 which is substantially identical to Figure 6 as described above, save that the Megaco messages 102, 104, 126 and 128 are replaced by the following messages. When setting up the call, the MGC 30 sends a Megaco Add message 134 to the MG 34 which confirms reservation of resources and establishment of a context by sending a Megaco Response message 136 back to MGC 30. The messages 134 and 136 are copied to RA 26 as Megaco Add message 138 and Response message 140, thereby informing RA 26 of the reservation of resources at the MG 34. Similarly, when terminating the call, the MGC 30 sends a Megaco Subtract message 142 to the MG 34 which confirms release of resources and disestablishment of a context by sending a Megaco Response message 144 back to MGC 30. The messages 142 and 144 are copied to RA 26 as Megaco Subtract message 146 and Response message 148, thereby informing RA 26 of the release of resources at the MG 34. It will be appreciated that Megaco messages passing between MGCs 30 and MGs 34 in other circumstances, such as telephone calls originating in the PSTN or in circumstances other than call establishment or termination, may be copied to RA 26 thereby informing RA 26 of the current state of resources at MGs 34. This information is stored in the database of RAs 26 (not shown) for future use in selecting a MGC when routing a call out to the PSTN.

According to an example not being part of the present invention (see e.g. RFC 2871), rather than pass Megaco messages through or copy them to RAs, MGCs share a common database with RAs with which the state of resources at MGs may be recorded as shown in Figure 8. In Figure 8 RAs 50 as well as MGCs 40, 42 have access to DB 48. When allocating or managing resources at MGs 44, 46, MGCs 40, 42 write data to DB 48 which may thus maintain the current state of resources at MGs 44, 46. This information is used by RAs 50 when selecting one of MGCs 40, 42 for routing a call out to the PSTN. For clarity, DB 38 is omitted, although it may be present. The message flows for establishing and terminating a telephone call originating in the 3G domain are shown in Figure 9 which is substantially identical to Figure 7 as described above, save for the following. For clarity, DB 38, LDAP Query message 13 and LDAP Response message 132 are omitted although they may be present. To determine which MGC to route SIP INVITE request message 100 to, RA 50 sends a LDAP Query message 156 to DB 48 and receives a LDAP Response message 158 informing it of the current state of resources at MGs 44, 46. On the basis of this information RA 50 selects one of MGCs 40, 42 and forwards SIP INVITE request message 100 as described above. Furthermore, Megaco messages 138, 140, 146, and 148 described in Figure 7 are replaced by the following. When setting up the call, the selected MGC 40 sends a LDAP Write message 160 to DB 48 recording the reservation of resources at the MG 44, to which DB 48 sends a LDAP Response message 150 in return. Similarly, when terminating the call, the MGC 40 sends a LDAP Write message 152 to DB 48 recording the release of resources at the MG 44, to which DB 48 sends a LDAP Response message 154 in return. It will be appreciated that other LDAP Write messages may be sent by MGC 40 to DB 48 in other circumstances, such as telephone calls originating in the PSTN or in circumstances other than call establishment or termination, thereby informing RA 50 of the current state of resources at MGs 44. This information may be used in future when selecting a MGC for routing a call out to the PSTN.

When routing a call out to the PSTN, a RA may select a MGC both on the basis of the current state of MGs under its control, such as the current utilisation and in or out of service status of bearer channels and media conversion resources, as well as on the basis of the static capabilities of MGs under its control, such as the different capabilities of media conversion resources and different characteristics of bearer channels to the PSTN.

The above embodiments, have described use of a RA in cases where the 3G domain is functioning normally. However, loss of data, restarts of RAs, MGs and MGCs due to errors and other abnormal events are relatively frequent. Mechanisms for recovery are needed. In an example not being part of the present invention described above, a RA may respond to an abnormal event resulting in lack of information regarding the state of MG resources by initiating an audit of resources available at some or all MGs. This may be achieved by the RA sending one or more Megaco AuditValue and/or ServiceChange commands to selected MGs which respond with the current state of their resources as described in the Megaco protocol documents.

It will be appreciated that a RA has substantially less processing requirements than a MGC. Unlike a MGC, a RA has no mapping of SIP to ISUP messages, actual control of circuits or accounting (billing functions) to perform. Thus, implementations of the present invention are likely to be scaleable. Furthermore, substantially no modifications to MGCs, MGs , SIP or Megaco are required. Thus, implementations of the present invention are likely to be easy to integrate into existing 3G networks.

It will be understood that the present invention may be implemented in a 3G network with or without also deploying a BGCF.

It will also be understood that the present invention has application to routing communications sessions from networks other than 3G network and to networks other than the PSTN. The present invention has application to routing communication sessions from any packet-, frame- or cell-based network, including IP, Frame Relay (FR), and Asynchronous Transfer Mode (ATM) networks, to any external network whether packet-, frame- or cell-based or circuit-switched and whether digital or analogue. For instance, the external network may itself be an IP based network, such as a 3GPP network, Internet domain or any other IP based network.

SIP may be used for session initiation, or other protocols such as H.323 Media gateways may be physically decomposed or not. Protocols other than Megaco may be used in physically decomposed gateways. In general, the present invention has application to routing communications sessions whenever gateway functions are selected to connect between different networks. When used to route communications sessions out to the PSTN, it will also be appreciated that the present invention is not limited to cases where the protocol used to communicate to the PSTN is ISUP. Other protocols may be used, such as Telephony User part.

It will also be understood that the present invention has application to routing out from a network any type of communications session which may be provided over the network, including telephony, facsimile, video and multimedia calls and conferencing, and data communications such as point-to-point data communications, point-to-multipoint, and broadcasting. Furthermore, it will be understood that communications sessions need not originate in the network performing the routing. For example, a first 3G network may receive a SIP INVITE request message to route a telephone call out to the PSTN forwarded from the BGCF of a second 3G network which selected the first 3G network as the network in which to breakout into the PSTN. The present invention has application in respect of the first 3G network routing the call out to the PSTN although the call did not originate in the first 3G network. Similarly, it will be understood that communications sessions need not terminate in the network to which the communications session is routed.

It is also to be understood that one or more functions, such MGCs or MGs, may be implemented on a single physical data processing device and, conversely, a single function may be implemented on one or more physical data processing devices.

It is also to be understood that while embodiments have referred to CSCFs, the present invention is equally applicable to SIP proxy and redirect servers, such as used in other IP multimedia networks.

## Claims

1. A method of selecting a gateway control function (10, 12) for routing a communications session from a packet-switched network, comprising:
selecting a gateway control function (10, 12) from a plurality of gateway control functions (10, 12), the selected gateway control function (10, 12) being capable of controlling a gateway function (14, 16) to route a communications session from the first network to the second network,
monitoring the current state of resources available to a plurality of gateway functions (14, 16) connecting a first, packet-switched network to a second network, whereby the monitoring is performed by a monitoring node (20) also receiving at least some of the messages sent between the plurality of gateway control functions (10, 12) and gateway functions (14, 16); wherein the current state of resources comprise the current state and/or the static capabilities of the gateway functions (14, 16); and wherein the selection is performed on the basis of the monitoring.

2. A method according to claim 1, wherein the monitoring is performed by passing the messages sent between the plurality of gateway control functions (10, 12) and gateway functions (14, 16) through the monitoring node (20).

3. A method according to claim 1 or 2, wherein the monitoring is performed by copying the messages sent between the plurality of gateway control functions (10, 12) and gateway functions (14, 16) to the monitoring node (20).

4. A method according to any preceding claim, wherein the current state of resources available to the plurality of gateway functions (14, 16) comprises the current utilisation or service status of resources available to the plurality of gateway functions.

5. A method according to any preceding claim, wherein the step of selecting a gateway control function (10, 12) is performed on the basis of static characteristics of the resources available to the plurality of gateway functions (14, 16).

6. A method according to any preceding claim, wherein the second network is a circuit-switched network, and the current state of resources comprises the state of bearer channels connecting the plurality of gateway functions to the circuit-switched network.

7. A method according to claim 2, wherein the static characteristics of the resources available to the plurality of gateway functions comprise static characteristics of the bearer channels connecting the plurality of gateway functions to the circuit switched network.

8. A method according to any preceding claim, wherein the second network uses different media formats for the communication session than the first network, and wherein the current state of resources comprises the state of media conversion resources available to the plurality gateway functions.

9. A method according to claim 9, wherein the static characteristics of the resources available to the plurality of gateway functions comprise capabilities of the media conversion resources available to the plurality gateway functions.

10. A method according to any preceding claim, wherein the first network is an Internet Protocol network and the second network is a Public Switched Telephone Network.

11. A method according to any preceding claim, wherein the communications session is a telephone call.

12. Apparatus adapted to perform the method of any preceding claim.

13. A computer program adapted to perform the method of any preceding claim.

## Patentansprüche

1. Verfahren zur Auswahl einer Gateway-Steuerfunktion (10, 12) zum Routen einer Kommunikationssitzung von einem paketvermittelten Netzwerk, umfassend
Auswählen einer Gateway-Steuerfunktion (10, 12) aus mehreren Gateway-Steuerfunktionen (10, 12), wobei die ausgewählte Gateway-Steuerfunktion (10, 12) fähig ist, eine Gatewayfunktion (14, 16) zu steuern, um eine Kommunikationssitzung vom ersten Netzwerk zum zweiten Netzwerk zu routen,
Überwachen des gegenwärtigen Zustands der Ressourcen, die für mehrere Gateway-Funktionen (14, 16) verfügbar sind, welche ein erstes, paketvermitteltes Netzwerk mit einem zweiten Netzwerk verbinden, wobei die Überwachung durch einen Überwachungsknoten (20) durchgeführt wird, der ebenfalls zumindest einige der Nachrichten empfängt, die zwischen den mehreren Gateway-Steuerfunktionen (10, 12) und Gateway-Funktionen (14, 16) gesendet werden;
wobei der gegenwärtige Zustand der Ressourcen den gegenwärtigen Zustand und/oder die statischen Fähigkeiten der Gateway-Funktionen (14, 16) umfaßt; und wobei die Auswahl auf Basis der Überwachung durchgeführt wird.

2. Verfahren nach Anspruch 1, wobei die Überwachung durch Führen der Nachrichten, die zwischen den mehreren Gateway-Steuerfunktionen (10, 12) und Gateway-Funktionen (14, 16) gesendet werden, durch den Überwachungsknoten (20) durchgeführt wird.

3. Verfahren nach Anspruch 1 oder 2, wobei die Überwachung durch Kopieren der Nachrichten, die zwischen den mehreren Gateway-Steuerfunktionen (10, 12) und Gateway-Funktionen (14, 16) gesendet werden, zum Überwachungsknoten (20) durchgeführt wird.

4. Verfahren nach einem der vorhergehenden Ansprüche, wobei der gegenwärtige Zustand der Ressourcen, die für die mehreren Gateway-Funktionen verfügbar sind, die gegenwärtige Verwendung oder den Dienststatus der Ressourcen, die für die mehreren Gateway-Funktionen verfügbar sind, umfaßt.

5. Verfahren nach einem der vorhergehenden Ansprüche, wobei der Schritt des Auswählens einer Gateway-Steuerfunktion (10, 12) auf Basis von statischen Eigenschaften der Ressourcen, die für die mehreren Gateway-Funktionen (14, 16) verfügbar sind, durchgeführt wird.

6. Verfahren nach einem der vorhergehenden Ansprüche, wobei das zweite Netzwerk ein leitungsvermitteltes Netzwerk ist, und der gegenwärtige Zustand der Ressourcen den Zustand von Trägerkanälen, die die mehreren Gateway-Funktionen mit dem leitungsvermittelten Netzwerk verbinden, umfaßt.

7. Verfahren nach Anspruch 2, wobei die statischen Eigenschaften, die für die mehreren Gateway-Funktionen verfügbar sind, statische Eigenschaften der Trägerkanäle, die die mehreren Gateway-Funktionen mit dem leitungsvermittelten Netzwerk verbinden, umfassen.

8. Verfahren nach einem der vorhergehenden Ansprüche, wobei das zweite Netzwerk für die Kommunikationssitzung andere Medienformate als das erste Netzwerk verwendet, und wobei der gegenwärtige Zustand der Ressourcen den Zustand von Medienumwandlungsressourcen, die für die mehreren Gateway-Funktionen verfügbar sind, umfaßt.

9. Verfahren nach Anspruch 8, wobei die statischen Eigenschaften, die für die mehreren Gateway-Funktionen verfügbar sind, Fähigkeiten der Medienumwandlungsressourcen, die für die mehreren Gateway-Funktionen verfügbar sind, umfassen.

10. Verfahren nach einem der vorhergehenden Ansprüche, wobei das erste Netzwerk ein Internet-Protokoll-Netzwerk und das zweite Netzwerk ein öffentliches Telefonwählnetz ist.

11. Verfahren nach einem der vorhergehenden Ansprüche, wobei die Kommunikationssitzung eine Fernsprechverbindung ist.

12. Vorrichtung, die dazu angepasst ist, das Verfahren nach einem der vorhergehenden Ansprüche durchzuführen.

13. Computerprogramm, das dazu angepasst ist, das Verfahren nach einem der vorhergehenden Ansprüche durchzuführen.

## Revendications

1. Procédé de sélection d'une fonction de commande de passerelle (10, 12) pour acheminer une session de communication à partir d'un réseau à commutation par paquets, comprenant les étapes consistant à :
sélectionner une fonction de commande de passerelle (10, 12) parmi une pluralité de fonctions de commande de passerelle (10, 12), la fonction de commande de passerelle (10, 12) sélectionnée étant capable de commander une fonction de passerelle (14, 16) pour acheminer une session de communication à partir du premier réseau jusqu'au second réseau,
surveiller l'état courant de ressources disponibles pour une pluralité de fonctions de passerelle (14, 16) connectant un premier réseau à commutation par paquets à un second réseau, moyennant quoi la surveillance est réalisée par un noeud de surveillance (20) recevant également au moins certains des messages envoyés entre la pluralité de fonctions de commande de passerelle (10, 12) et les fonctions de passerelle (14, 16), dans lequel l'état courant des ressources comprend l'état courant et/ou les capacités statiques des fonctions de passerelle (14, 16), et dans lequel la sélection est réalisée en se basant sur la surveillance.

2. Procédé selon la revendication 1, dans lequel la surveillance est réalisée en transmettant les messages envoyés entre la pluralité de fonctions de commande de passerelle (10, 12) et les fonctions de passerelle (14, 16) à travers le noeud de surveillance (20).

3. Procédé selon la revendication 1 ou 2, dans lequel la surveillance est réalisée en copiant les messages envoyés entre la pluralité de fonctions de commande de passerelle (10, 12) et les fonctions de passerelle (14, 16) au noeud de surveillance (20).

4. Procédé selon l'une quelconque des revendications précédentes, dans lequel l'état courant des ressources disponibles pour la pluralité de fonctions de passerelle (14, 16) comprend l'utilisation ou le statut des services actuel(le) des ressources disponibles pour la pluralité de fonctions de passerelle.

5. Procédé selon l'une quelconque des revendications précédentes, dans lequel l'étape consistant à sélectionner une fonction de commande de passerelle (10, 12) est réalisée en se basant sur les caractéristiques statiques des ressources disponibles pour la pluralité de fonctions de passerelle (14, 16).

6. Procédé selon l'une quelconque des revendications précédentes, dans lequel le second réseau est un réseau à commutation de circuit, et l'état courant des ressources comprend l'état des voies porteuses connectant la pluralité de fonctions de passerelle au réseau à commutation de circuit.

7. Procédé selon la revendication 2, dans lequel les caractéristiques statiques des ressources disponibles pour la pluralité de fonctions de passerelle comprennent les caractéristiques statiques des voies porteuses connectant la pluralité de fonctions de passerelle au réseau à commutation de circuit.

8. Procédé selon l'une quelconque des revendications précédentes, dans lequel le second réseau utilise des formats de support différents pour la session de communication de ceux du premier réseau, et dans lequel l'état courant des ressources comprend l'état des ressources de conversion de support disponibles pour la pluralité de fonctions de passerelle.

9. Procédé selon la revendication 9, dans lequel les caractéristiques statiques de ressources disponibles pour la pluralité de fonctions de passerelle comprennent les capacités des ressources de conversion de support disponibles pour la pluralité de fonctions de passerelle.

10. Procédé selon l'une quelconque des revendications précédentes, dans lequel le premier réseau est un réseau de protocole Internet et le second réseau est un réseau téléphonique public commuté.

11. Procédé selon l'une quelconque des revendications précédentes, dans lequel la session de communication est un appel téléphonique.

12. Appareil adapté pour mettre en oeuvre le procédé selon l'une quelconque des revendications précédentes.

13. Programme informatique adapté pour mettre en oeuvre le procédé selon l'une quelconque des revendications précédentes.
